# EUROPÄISCHE PATENTSCHRIFT

(11) **EP 1 719 067 B1**
(45) Veröffentlichungstag und Bekanntmachung des Hinweises auf die Patenterteilung: **21.03.2007**
(21) Anmeldenummer: 05761111.3
(22) Anmeldetag: 21.07.2005
(51) Int. Cl.: G06K 7/00

(54) **VERFAHREN ZUM BETRIEB VON RFID SCHREIB-/LESEGERÄTEN**
METHOD FOR THE OPERATION OF RFID READ/WRITE DEVICES
PROCEDE POUR FAIRE FONCTIONNER DES DISPOSITIFS D'ECRITURE/LECTURE A RFID

(30) Priorität: 09.10.2004 CH 167804
(43) Veröffentlichungstag der Anmeldung: 08.11.2006
(73) Patentinhaber: Elektrobit AG, 8608 Bubikon (CH)
(72) Erfinder: KÜNG, Roland, 8633 Wolfhausen (CH)
(74) Vertreter: Rentsch, Rudolf A.
(86) Internationale Anmeldenummer: PCT/CH2005/000430
(87) Internationale Veröffentlichungsnummer: WO 2006/037239

(56) Entgegenhaltungen:
- EP-A- 0 680 002
- EP-A- 1 239 634
- WO-A-20/04004196

## Beschreibung

Die Erfindung fällt in das Gebiet der Kommunikationstechnik. Sie betrifft ein Verfahren zum Betrieb von RFID-Schreib-/Lesegeräten gemäss dem Oberbegriff des Anspruchs 1.

### Stand der Technik

Ein RFID System besteht im wesentlichen aus einem RFID-Schreib-/Lesegerät (Reader) und elektronischen Etiketten (Tag). Letztere können passiv, d.h. ohne Batterie arbeiten und sind aber auf dauernde Anwesenheit eines vom Lesegerät ausgesendeten Trägersignals angewiesen, auch Energieträger genannt. RFID Systeme mit Reichweiten von mehreren Metern benutzen UHF- oder Mikrowellenfrequenzen. Das RFID-Schreib-/Lesegerät selber besteht aus einem Sender mit einer Basisband-Baugruppe und einer Hochfrequenz-Baugruppe (HF-Baugruppe) sowie einem Empfänger mit ebenfalls einem Hochfrequenz-Teil (HF-Teil) und einem Basisbandteil.

Zur Erreichung von Lesedistanzen im Bereich einiger Meter muss bei passiven elektronischen Etiketten eine Sendeleistung von etwa 1 Watt (30 dBm) erzeugt und abgestrahlt werden. Andererseits müssen Empfänger der RFID-Schreib-/Lesegeräte die geringen Pegel des Antwortsignals detektieren, welches von den Tags reflektiert wird. Mit zunehmender Dichte von RFID-Schreib-/Lesegeräten innerhalb eines gegebenen Raumvolumens besteht die Gefahr der Systemstörung durch die eigenen RFID-Signale, welche im Vergleich zu den Etiketten-Antwortsignalen oft stärker an dem Empfänger eintreffen als das Antwortsignal.

Ein Zahlenbeispiel ergibt mit einer Sendeleistung von +30 dBm für einen Abstand von 10 m eines RFID-Schreib-/Lesegeräts bei 868 MHz ein Störsignal von -20 dBm am Empfängereingang. Das Nutzsignal von der Etikette beträgt jedoch im UHF Bereich bei einer Distanz von ca. 4 m nur gerade -70 dBm. Die digitale Darstellung des offensichtlich schwachen Nutzsignals nach einem A/D-Wandler im Empfänger ist somit durch eine geringe Auflösung gekennzeichnet. Werden gar mehrere RFID-5ignale empfangen, .ist die Kommunikation mit Etiketten.kaum mehr möglich, da nebst den Signalen der RFID-Schreib-/Lesegeräte auch viele Intermodulationsprodukte das Nutzband weiter belasten. Zwar wird vorgeschlagen, dass ein RFID-Schreib-/Lesegerät vor Sendebeginn eine den Funkvorschriften entsprechende Listen-Before-Tatk (LBT) Operation durchführen soll, um festzustellen, ob der Frequenzkanal unbesetzt ist, doch führt dies in Anwendungen mit grosser Anzahl unkoordinierter RFID-Schreib-/Lesegeräten zu hoher Ineffizienz. Einzelne RFID-Schreib-/Lesegeräte können zeitweise abgeschattet sein durch bewegliche Objekte und stören trotzdem.

Andere RFID-Schreib-/Lesegeräte stören wiederum nicht, wenn sie zeitgleich senden, weil ihre Antennen momentan in eine andere Richtung strahlen. Mit einzelnen Störungen durch andere RFID-Schreib-/Lesegeräte ist also jederzeit zu rechnen. Verfahren, welche den einzelnen RFID-Schreib-/Lesegeräten synchrone Zeitschlitze zur Verfügung stellen sind ineffizient, da sich oftmals keine Etiketten vor einem RFID-Schreib-/Lesegerät befinden und dann der Zeitschlitz ungenutzt verstreicht Für eine Trennung der RFID-Signale im Frequenzbereich stehen oft nicht genug Frequenzbänder zur Verfügung. Allenfalls kann das in den Funkvorschriften für RFID zugelassene Verfahren des Frequency Hopping die Situation etwas erleichtern, indem sich mehrere RFID-Schreib-/Lesegeräte wenigstens einige Frequenzen teilen und die Anzahl Kollisionen geringer ausfällt.

Vorgeschlagen von den Regulierungsbehörden für RFID im UHF- und Mikrowellenbereich wird die Einführung einer LBT-Phase vor einem Abfragezyklus, in welcher der Sender eines RFID-Schreib-/Lesegeräts ausgeschaltet ist und über ein Zeitintervall T0 das Empfangsignal analysiert wird. In diesem Empfangssignal sind die Abfragesignale anderer RFID-Schreib-/Lesegeräte enthalten und es lässt sich entscheiden, ob der Sender eingeschaltet werden darf oder nicht. Besitzen die RFID-Schreib-/Lesegeräte geeignete Mittel, die deren Identifikation erlaubt, so können sich mehrere RFID-Schreib-/Lesegeräte selbständig im kooperativen Sinn absprechen, um gegenseitige Interferenz zu vermeiden. Eine solche Absprache kann beispielsweise durch Ergänzung des RFID-Schreib-/Lesegeräts mit einer Bluetooth (BT) oder einer drahtlosen LAN (WLAN) Funktion ermöglicht werden.

Kombinierte RFID-Schreib-/Lesegeräte welche RFID und BT enthalten, wie in der US2002/ 0126013 und der CA 2405894 beschrieben, können nahe liegend in dieser Art auch zu einer Kooperation zwischen Lesegeräten genutzt werden. Der Nachteil der BT oder WLAN basierten Absprache ist im höheren Hardwareaufwand oder in einer zusätzlichen Belastung des Frequenzbandes (z.B. RFID im 2.4 GHz ISM-Band) gegeben. Eine verbesserte Variante, wie in der WO 2004/004196 dargelegt, könnte durch Neukonfiguration eines in einem RFID-Schreib-/Lesegerät enthaltenen Software-Definded-Radio-Basisbandteils (SDR) zu einer BT- oder WLAN-Funktion erreicht werden. Der Nachteil liegt bei dieser Methode darin, dass sie sich erstens nur für Frequenzbänder eignet, welche RFID und BT oder WLAN Emission zulassen (derzeit nur ISM 2.4 GHz) und zweitens, dass durch die Umkonfiguration des SDR wertvolle Operationszeit für den RFID-Schreib-/Leseprozess verloren geht, während der SDR beispielsweise BT- oder WLAN-Funktionen ausübt

In der WO 2004/015614 wird die Synchronisation aller RFID-Trägersignale der RFID-schreib-/Lesegeräte vorgeschlagen, um in so genannten Direct-Conversion-Empfängern keine Wechselsignale (AC) zu erzeugen, welche sich nicht einfach ausfiltern liessen. Die störenden AC-Komponenten entstehen durch die geringfügig abweichenden Quarzfrequenzen in jedem RfID-Schreib-/Lesegerät. Diese Synchronisation ist aber aufwendig, da sie einen Referenzsender oder eine Verkabelung der RFID-Schreib-/Lesegeräte erfordert. Neben den oben erwähnten BT- oder WLAN-Funktionen ist als eine drahtgebundene Vernetzung benachbarter RFID-Schreib-/Lesegeräte das Ethernet oder eine RS232-Schnittstelle zu nennen bzw. ähnliche Mittel, bei der ein Master die zeitliche Koordination aller Lesevorgänge übernimmt.

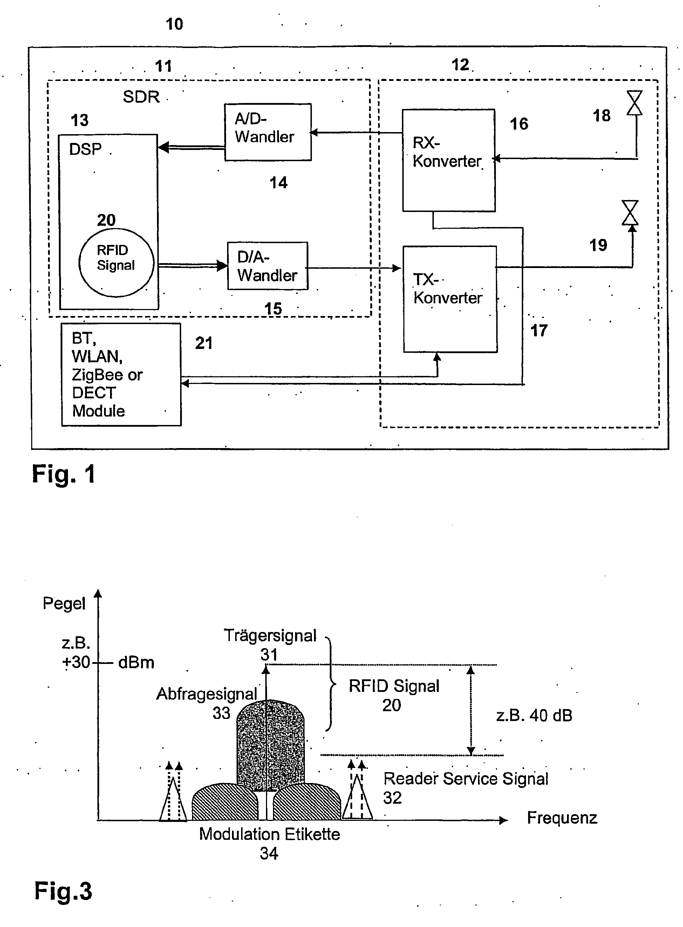

Ein herkömmliches RFID-Schreib-/Lesegerät ist in Fig. 1 gezeigt Die vorliegende Technologie basiert auf dem so genannten Software Defined Radio (SDR). Ein RFID-Schreib-/Lesegeräte 10 besteht aus einem Software definierten Basisbandteil (SDR) 11 und einem HF-Teil 12. In solchen SDR basierten Sende-/Empfangsanlagen werden die komplex-wertigen Signale soweit rein rechnerisch in einem Signalprozessor 13 aufbereitet bzw. verarbeitet, dass sie nur noch mittels linearen Konvertern (Up-Converter bzw. Down-Converter) ins Hochfrequenzband verschoben werden müssen. Ein TX-Konverter 17 im Sender wird mit einem komplexen Basisbandsignal (Inphase- und Quadratur- Signal) gespiesen, welches vom Signalprozessor 13 über einen zweifachen Digital/Analog (D/A) -Wandler 15 ausgegeben wird. Das Ausgangssignal wird an die Sendeantenne 19 weitergeleitet. Von der Empfangsantenne 18 werden Empfangssignale über einen RX-Konverter 16 in ein komplexes Basisbandsignal (Inphase- und Quadratur- Signal) überführt und an einen zweifachen Analog/Digital (A/D) -Wandler 14 weitergeleitet und vom Signalprozessor 13 übernommen. Eine bekannte Empfangsarchitektur benutzt eine so genannte Direct Conversion Stufe (DCS) für den RX-Konverter 16, um von der Hochfrequenz (HF) ins Basisband zu gelangen. Zur Signalisation zwischen RFID-Schreib-/Lesegeräten kann eine BT- oder WLAN-Basisbandstufe 21 in das Gerät integriert werden, welche im besten Fall die Konverter 16, 17 und Antennen 18, 19 mit benutzten kann.

### Darstellung der Erfindung

Es ist deshalb Aufgabe der vorliegenden Erfindung ein Verfahren zum Betrieb von RFID-Schreib-/Lesegeräten dahingehend weiterzuentwickeln, dass eine Anzahl gleichzeitig betriebener, benachbarter RFID-Schreib-/Lesegeräte kontrolliert ungestört nebeneinander operieren können, ohne auf eine herkömmliche drahtgebundene oder drahtlose Zusatzinstallation abstellen zu müssen.

Die Lösung der der Erfindung zugrunde liegenden Aufgabe ist in Anspruch 1 angegeben. Diesen Erfindungsgedanken vorteilhaft weiterbildende Merkmale sind Gegenstand der Unteransprüche 2 bis 13.

Erfindungsgemäss wird ein Verfahren für den Austausch von Informationen und Daten zwischen RFID-Schreib-/Lesegeräten - im Folgenden kurz: Lesegeräte - vorgeschlagen, für den Austausch von Informationen und Daten zwischen Lesegeräten das schon vorhandene, für die Energieversorgung einer elektronischen Etikette notwendige, leistungsstarke Trägersignal zu verwenden. Dieses Trägersignal wird zum Zweck der System bedingten Datenübertragung zwischen Lesegerät und Etikette mit dem Abfragesignal moduliert. Im Folgenden wird das Trägersignal mit oder ohne dem Abfragesignal beaufschlagt allgemein als RFID-Signal (in seiner Basisbandform) bezeichnet. Dies kann zum Beispiel vorteilhaft in der Amplitude, oder gemäss bestehenden RFID Standard geschehen, derart, dass die Demodulation auf einer Etikette einfach gehalten werden kann. Der Modulationsindex ist dabei aus dem selben Grund der Einfachheit in der Grössenordnung von einigen 10% bei einer Datenrate von beispielsweise 100 kBit/s. Amplitudenmodulationen von weniger als 1% werden von Etiketten nicht wahrgenommen. Natürlich wäre auch denkbär, das Trägersignal zusätzlich digital in der Frequenz mit FSK oder in der Phase mit PSK zu modulieren. Auch Kombinationen davon sind selbstverständlich einsetzbar, abhängig von den Funkvorschriften, insbesondere dann wenn ein Unterträgerverfahren zur Modulation verwendet wird. Währenddem die Etiketten ihre Daten an das Lesegerät schicken, muss der Sender im Lesegerät das Trägersignal ohne Abfragesignal für die Etiketten weiterhin ausstrahlen, um die Etiketten weiterhin mit Energie zu versorgen. Ein geeignetes Trägersignal für eine Kommunikation zwischen Lesegeräten steht also während der ganzen Transaktionszeit mit einer Etikette zur Verfügung. Für die Kommunikation zwischen mehreren Lesegeräten wird vorteilhafterweise in jedem Lesegerät erfindungsgemäss ein weiteres Signal, das Reader Service Signal, in seiner Basisbandform in einem digitalen Signalprozessor generiert und mit dem RFID-Signal (in seiner Basisbandform) - umfassend das Trägersignal und das Abfragesignal - verknüpft, und zwar derart, dass das Trägersignal in seiner Basisbandform in der Amplitude, frequenz oder Phase mit einem als ASK, FSK oder PSK modulierten Reader Service Signal beaufschlagt wird und anschliessend in einem HF-Teil ins Hochfrequenzband verschoben wird. Besonders einfach geeignet erscheint eine Trägersignalmodulation in der Amplitude oder eine additive Zufügung als Einseitenbandsignal, derart, dass die spektralen Anteile beidseitig oder einseitig an die Bandgrenze des Kanals oder in eine andere spektrale Lücke zu liegen kommen, ohne den Nutzdatenverkehr zwischen Lesegerät und Etikette zu beeinträchtigen. Dies wird bekanntermassen durch Verwendung eines modulierten Unterträgers für die Erzeugung des Reader Service Signals erreicht. Durch den geringen Modulationsgrad wird das Reader Service Signal von den Etiketten nicht erkannt, da dieses Reader Service Signal zum Beispiel bei einem Pegel von 40 dB unterhalb des Trägersignals nicht.störend wirkt. Dank der hohen Leistung des Trägersignals (+30 dBm) ist dieser Pegel für andere Lesegeräte in der Umgebung aber immer noch mit gutem Signal /Geräuschabstand empfangbar.

Die Methode mit der oben genannten Unterträgermodulation hat zudem den grossen Vorteil, dass in einem Direct Conversion Stufen-Empfänger das Reader Service Signal nicht als Gleichspannung (DC) auftritt, womit der meist störende DC-Anteil nach einem RX-Konverter im Empfänger weggefiltert werden kann, ohne das Reader Service Signal zu verlieren.

In allen Fällen wird vorteilhaft von jedem Lesegerät nebst den Service Informationen auch eine ldentifikationssequenz (auch als Adresse bezeichnet) ausgestrahlt. Mit Hilfe der empfangenen Adresse kann ein Lesegerät feststellen, welches andere Lesegerät aus irgendeinem Grund die Transaktion zu und von seinen Etiketten stört und diesen Störer sodann zu einem kooperativen Verhalten auffordern. Ein kooperatives Verhalten kann sich beispielsweise in einer zeitlichen Absprache der Kanalbenutzung, in einer synchronisierten Abfolge der Benutzung bei Mehrkanalsystemen oder einer Prioritätsregelung auswirken. Durch die Zusatzmodulation entsteht im Lesegerät selber kein Mehraufwand an Hardware, da sich diese Signale rein rechnerisch innerhalb der SDR Architektur erzeugen und per Software demodulieren lassen. Neben Information lassen sich auch Statusbefehle im Broadcast Betrieb oder im adressierten Betrieb übermitteln, wie etwa Zeitmarken, Reservation von Zeit- oder Kanal-Resourcen oder Prioritätsansprüche (Funktion eines extern Triggers). Insbesondere kann ein Netzwerk von Lesegeräten in einen synchronen Zustand versetzt werden, wenn eine Station als Master ausgezeichnet wird und als spezielle Ausführung des Reader Service Signals die Referenzzeit dem Trägersignal aufmoduliert. Alle Lesegeräte im Empfangsbereich (welche somit potentielle Störer sind) richten daraufhin ihre interne Uhr. Frequency Hopping oder andere Verfahren lassen sich auf diese Weise synchron bewerkstelligen und danach kollisionsfrei betreiben; auch hierfür wird wiederum keine zusätzliche Hardware im Netzwerk benötigt. In Anlagen mit mehreren Lesegeräten, welche dieselbe Gruppe von Etiketten bearbeiten sollen (z.B. Palettestapel), können auch Informationen über bereits erfolgreich bearbeitete Etiketten zwischen den Lesegeräten ausgetauscht werden, um den Arbeitsaufwand und Doppellesungen vor Ort zu optimieren.

Steht genügend Bandbreite zur Verfügung, wird das Reader Service Signal vorteilhaft oberhalb des Nutzbereichs für den eigentlichen Lesevorgang angelegt. Alternativ kann das Reader Service Signal auch nur während der Aufrufzeit der Etiketten mitgesendet werden und während des Empfangs der reflektierten Daten von den Etiketten stumm geschaltet werden, um eine Beeinträchtigung beim Lesen zu verringern. In einer weiteren Ausführung kann der Hilfsträger mit einer Pseudozufalls-Sequenz (PN) moduliert werden und so vom Antwortsignal der Etiketten dekorreliert, also durch Korrelation mit einer Kopie der PN-Sequenz im Empfänger eines zweiten Lesegerätes, getrennt werden. Das Frequenzband kann in diesem Fall mit dem Band des Etiketten-Antwortsignals ganz oder teilweise übereinstimmen. Die Rückgewinnung der Originalsequenz ist im Lesegerät aufgrund der verfügbaren Rechenleistung, welche erfindungsgemäss einem Software-Definded-Radio-Basisbandteil (SDR) innewohnt, kein Problem. Werden in jedem Lesegerät verschiedene, den Lesegeräten bekannte, unkorrelierte PN-Sequenzen verwendet, so kann auch bei gleichzeitiger Aussendung mehrerer Lesegeräte eine Kollision detektiert, der Störer identifiziert werden und es können somit kooperative Massnahmen ergriffen werden.

Ist ein RFID-System bestehend aus einer Anzahl Lesegeräten mit der neuartigen Reader Service Signal Technik ausgerüstet, so kann ein Netzwerk vom unkoordinierten Betrieb in einen kooperativen Betriebszustand gebracht werden, mit dem Ziel möglichst wenig Lesezeit zu verschwenden und möglichst mit guter Sicherheit auch grosse Mengen an Etiketten zu erkennen. Es lassen sich mehrere Reader auf engem Raum (zum Beispiel Torschleuse) anbringen, ohne dass nach einer erfolgten Kooperations-Phase gegenseitige Störungen durch die hohen Trägersignalleistungen auftreten.

Mit zunehmender Integrationsleistung können auch Systeme mit den bekannten Verfahren des Space-Time Processing in ihrer Leistungsfähigkeit erhöht werden. Solche mit adaptiven Antennen-Arrays ausgerüstete Lesegeräte können durch elektronische Steuerung des Richtdiagramms im Signalprozessor oder an Sendeantennen bzw. Empfangsantennen, sowie der zeitlichen Synchronisation der Leseprozesse völlig neue kooperative Lesevorgänge ermöglichen, wie beispielsweise zweidimensionales Abscannen einer Fläche durch zwei Lesegeräte mit 90 Grad gegeneinander gedrehten Antennen-Arrays oder Antennen-Polarisation. Der dazu notwendige Informationsaustausch erfolgt dabei über das Reader Service Signal kabellos und ohne wesentlichen Zeitverzug. Das Verfahren ist leicht einsehbar auf beliebige Oberflächen mit mehr als zwei Reader erweiterbar.

### Kurze Beschreibung der Zeichnung

Im Folgenden wird die Erfindung anhand von Figuren beispielhaft erläutert. Gleiche Gegenstände sind in den Figuren grundsätzlich mit gleichen Bezugszeichen gekennzeichnet. Es zeigen rein schematisch die
- Fig. 1: eine Vorrichtung zur Durchführung eines Verfahrens zum Betrieb von RFID-Schreib-/Lesegeräten gemäss dem Stand der Technik, die
- Fig. 2: eine Vorrichtung zur Durchführung eines erfindungsgemässen Verfahrens zum Betrieb von RFID-Schreib-/Lesegeräten und die
- Fig. 3: ein beispielhaftes Spektrum im Hochfrequenzbereich (HF-Bereich) mit einem Sendesignal des RFID-Schreib-/Lesegeräts, einem Antwortsignal einer Etikette und einem erfindungsgemässen beispielhaften Reader Service Signal.

### Wege zur Ausführung der Erfindung

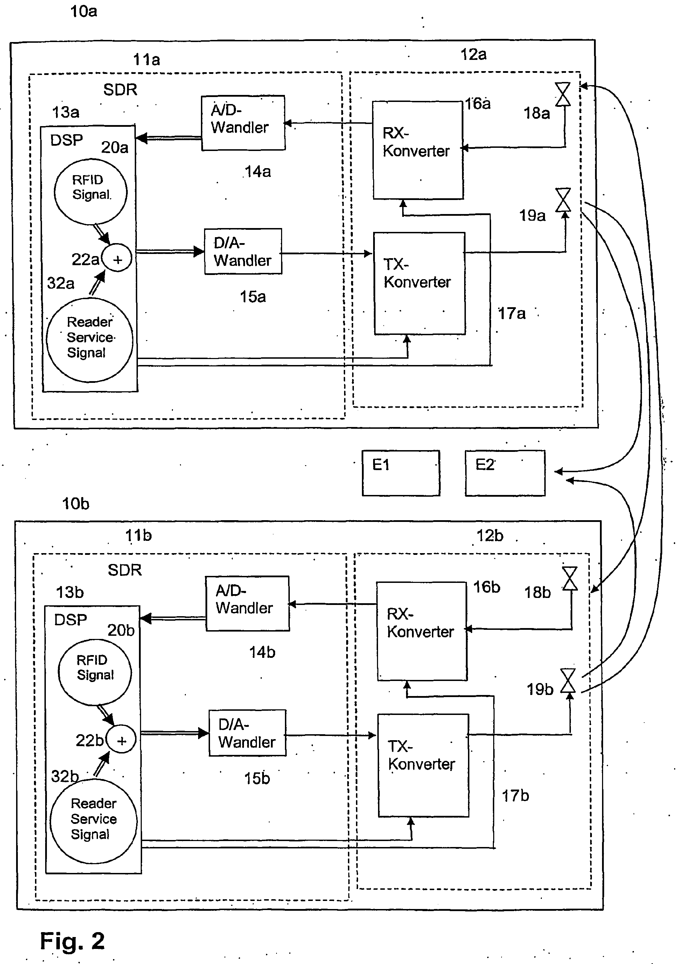

Die Fig. 2 zeigt ein erstes und ein zweites RFID-Schreib-/Lesegerät -im Folgenden kurz: Lesegerät- 10a, 10b die in Sendedistanz benachbart zueinander angeordnet sind. Im wesentlichen umfassen diese Lesegeräte 10a, 10b ein Software definiertes Basisbandteil 11a, 11b (SDR) und ein Hochfrequenzteil 12a; 12b (HF-Teil). Im SDR 11a, 11b ist jeweils ein digitaler Signalprozessor (DSP) 13a, 13b mit einem A/D-Wandler 14a, 14b und einem D/A-Wandler 15a, 15b verbunden. Des Weiteren weist der DSP 13a, 13b eine Verbindung mit einem RX-Konverter 16a, 16b und einem TX-Konverter 17a, 17b im HF-Teil 12a, 12b auf. Die RX-Konverter 16a, 16b sind jeweils mit einer Empfangsantenne 18a, 18b gekoppelt und die TX-Konverter 17a, 17b jeweils mit einer Sendeantenne 19a, 19b. Zwischen den Lesegeräten 10a, 10b sind zwei elektronische Etiketten E1, E2 dargestellt. Geschwungene Zeiger, jeweils ausgehend von den Sendeantennen 19a, 19b, bedeuten, dass diese Sendeantennen jeweils Signale zu dem benachbarten Lesegerät und zu den Etiketten E1, E2 abstrahlen.

In Fig. 3 ist beispielhaft ein Spektrum im Hochfrequenzbereich (HF-Bereich) gezeigt mit einem Sendesignal, umfassend ein Trägersignal 31 und ein Abfragesignal 33 der Lesegeräte 10a, 10b.

Des Weiteren ist in diesem Spektrum ein Antwortsignal 34 einer Etikette E1, E2 und ein erfindüngsgemässes, beispielhaftes Reader Service Signal 32 gezeigt

Für den Austausch von Informationen und Daten zwischen den Lesegeräten 10a, 10b wird das vorhandene, für die Energieversorgung der elektronischen Etiketten E1, E2 notwendige, leistungsstarke Trägersignal 31 verwendet. Dieses Trägersignal 31 wird bereits zum Zweck der System bedingten Datenübertragung zwischen Lesegeräten 10a, 10b und Etiketten E1, E2 mit dem Abfragesignal 33 moduliert. Dieses Trägersignal 31 wird zum Beispiel in der Amplitude moduliert, und zwar so, dass die Demodulation auf einer Etikette E1, E2 einfach gehalten werden kann. Der Modulationsindex ist dabei aus demselben Grund der Einfachheit in der Grössenordnung von einigen 10% bei einer Datenrate von beispielsweise 100 kBit/s.

Natürlich wäre auch denkbar, das Trägersignal 31 zusätzlich digital in der Frequenz mit FSK oder in der Phase mit PSK zu modulieren. Auch Kombinationen davon sind selbstverständlich einsetzbar, abhängig von den Funkvorschriften, insbesondere wenn ein Unterträgenrerfahren zur Modulation verwendet wird. Währenddem die Etiketten E1, E2 ihre Daten an das Lesegerät 10a, 10b schicken (Modulation Etikette 34), muss der Sender (TX-Konverter 17a, 17b) im Lesegerät 10a, 10b das Trägersignal 31 auch ohne Abfragesignal 33 für die Etiketten E1, E2 weiterhin ausstrahlen, um die Etiketten weiterhin mit Energie zu versorgen. Ein geeignetes Trägersignal steht also während der ganzen Transaktionszeit mit der Etikette E1, E2 zur Verfügung.

Für die Kommunikation zwischen den Lesegeräten 10a, 10b wird in jedem Lesegerät erfindungsgemäss ein weiteres Signal, das Reader Service Signal 32, in seiner Basisbandform in einem digitalen Signalprozessor 20a, 20b generiert und mit dem RFID-Signal (in seiner Basisbandform) - umfassend das Trägersignal 31 und das Abfragesignal 33 für die Etiketten E1, E2 - im Kombinationsglied 22a, b verknüpft, und zwar derart, dass das Trägersignal 31 in seiner Basisbandform in der Amplitude, Frequenz oder Phase mit dem als ASK, FSK oder PSK modulierten Reader Service Signal 32 beaufschlagt wird und anschliessend in dem HF-Teil 12a, 12b ins Hochfrequenzband verschoben wird.

Die Lesegeräte 10a, 10b senden nebst den Service Informationen auch eine Identifikationssequenz (auch als Adresse bezeichnet) aus. Mit Hilfe einer empfangenen Adresse eines benachbarten Lesegeräts 10b stellt ein erstes Lesegerät 10a fest, welches andere Lesegerät aus irgendeinem Grund die Transaktion zu und von seinen Etiketten E1, E2 stört, daraufhin fordert das erste Lesegerät 10a das störende Lesegerät 10b zu einem kooperativen Verhalten auf. Ein kooperatives Verhalten kann sich beispielsweise in einer zeitlichen Absprache der Kanalbenutzung, in einer synchronisierten Abfolge der Benutzung bei Mehrkanalsystemen inklusive Frequency Hopping Verfahren oder einer Prioritätsregelung auswirken.

Neben Information lassen sich auch Statusbefehle im Broadcast Betrieb oder im adressierten Betrieb übermitteln, wie etwa Zeitmarken, Reservation von Zeit- oder Kanal-Resourcen oder Prioritätsansprüche (Funktion eines externen Triggers). Insbesondere kann ein Netzwerk von Lesegeräten in einen synchronen Zustand versetzt werden, wenn eine Station als Master ausgezeichnet wird und als spezielle Ausführung des Reader Service Signals 32 eine Referenzzeit dem Trägersignal 31 aufmoduliert. Alle Lesegeräte 10a, 10b im Empfangsbereich (welche somit potentielle Störer sind) richten daraufhin ihre interne Uhr. Frequency Hopping oder andere Verfahren lassen sich auf diese Weise synchron bewerkstelligen und danach kollisionsfrei betreiben.

In Anlagen mit mehreren Lesegeräten, welche dieselbe Gruppe von Etiketten bearbeiten sollen (z.B. Palettenstapel), können auch Informationen über bereits erfolgreich bearbeitete Tags zwischen den Lesegeräten ausgetauscht werden, um den Arbeitsaufwand und Doppellesungen vor Ort zu vermeiden.

Steht genügend Bandbreite zur Verfügung, wird das Reader Service Signal 32 vorteilhaft oberhalb des Nutzbereichs für den eigentlichen lesevorgang, d.h. oberhalb des Abfragesignals 33 und der Modulation Etikette 34 angelegt Alternativ kann das Reader Service Signal 32 auch nur während der Aufrufzeit der Etiketten E1, E2 mitgesendet werden und während des Empfangs der reflektierten Daten 34 von den Etiketten E1, E2 stumm geschaltet werden, um eine Beeinträchtigung beim Lesen zu Verringern.

In einer weiteren Ausführung des erfindungsgemässen Verfahrens wird das Reader Service Signal 32 mit einer Pseudozufalls-Sequenz (PN) moduliert und so vom Antwortsignal der Etiketten E1, E2 dekorreliert, also durch Korrelation mit einer Kopie der PN-Sequenz im Empfänger des Lesegerätes, getrennt Das Frequenzband kann in diesem Fall mit dem Band des Etiketten-Antwortsignals 34 ganz oder teilweise übereinstimmen. Werden in jedem Lesegerät verschiedene, den Lesegeräten bekannte, unkorrelierte PN-Sequenzen verwendet, so kann auch bei gleichzeitiger Aussendung mehrerer Lesegeräte eine Kollision detektiert, der Störer identifiziert werden und es können somit kooperative Massnahmen ergriffen werden.

Mit zunehmender Integrationsleistung können auch Systeme mit den bekannten Verfahren des Space-Time Processing in ihrer Leistungsfähigkeit erhöht werden. Sind die Lesegeräte 10a, 10b mit adaptiven Antennen-Arrays ausgerüstet, können durch elektronische Steuerung des Richtdiagramms im Signalprozessor 13a, 13b oder der Sendeantennen 19a, 19b, bzw. der Empfangsantennen 18a, 19b, sowie der zeitlichen Synchronisation der Leseprozesse neue kooperative Lesevorgänge ermöglicht werden, wie beispielsweise zweidimensionales Abscannen einer Fläche durch zwei Lesegeräte mit 90 Grad gegeneinander gedrehten Antennen-Arrays oder Antennen-Polarisation. Der dazu notwendige Informationsaustausch erfolgt dabei ebenfalls über das Reader Service Signal 32 kabellos und ohne wesentlichen Zeitverzug. Das Verfahren ist leicht einsehbar auf beliebige Oberflächen mit mehr als zwei Lesegeräten 10a, 10b erweiterbar.

Die in den Figuren dargestellten Ausführungsformen dienen klarerweise der Erläuterung der Erfindung an Beispielen. Dem Fachmann ist klar, dass es weitere Möglichkeiten der Ausgestaltung der Erfindung gibt, die hier aus Platzgründen nicht alle wiedergegeben werden können.

### Bezugszeichenliste

| | |
|---|---|
| 10, 10a, 10b | RFID-Schreib-/Lesegerät |
| 11, 11a, 11b | Software definiertes Basisbandteil (SDR) |
| 12, 12a, 12b | Hochfrequenzteil (HF-Teil) |
| 13, 13a, 13b | Digitaler Signalprozessor (DSP) |
| 14, 14a, 14b | A/D-Wandler |
| 15, 15a, 15b | D/A-Wandler |
| 16, 16a, 16b | RX-Konverter |
| 17, 17a, 17b | TX-Konverter |
| 18, 18a, 18b | Empfangsantenne |
| 19, 19a, 19b | Sendeantenne |
| 20, 20a, 20b | RFID-Signal |
| 21 | Kommunikationseinheit |
| 22, 22a, 22b | Kombinationsglied |
| 31 | Trägersignal |
| 32 | Reader Service Signal |
| 33 | Abfragesignal RFID-Schreib-Lesegerät |
| 34 | Modulation Etikette |
| E1, E2 | elektronische Etiketten |

## Patentansprüche

1. Verfahren zum Betrieb eines ersten RFID Schreib-/Lesegeräts (10a) und mindestens eines zweiten RFID Schreib-/Lesegeräts (10b), wobei das erste und das zweite RFID Schreib-/Lesegerät (10a, 10b) jeweils ein HF-Teil (12a, 12b) und ein auf digitaler Signalverarbeitung basierendes Basisbandteil (11a, 11b) mit einem Signalprozessor (13a, 13b) umfassen und wobei das erste und das zweite RFID Schreib-/Lesegerät (10a, 10b) in drahtloser Sendedistanz zueinander angeordnet sind,
**dadurch gekennzeichnet,**
- **dass**, ein Reader Service Signal (32), in seiner Basisbandform im Signalprozessor (13a, 13b) generiert und mit einem RFID Signal (20) in seiner Basisbandform, bestehend aus dem Trägersignal (31) und optional dem Abfragesignal (33), verknüpft wird, so dass das RFID Signal (20) in der Amplitude, Frequenz oder Phase mit dem Reader Service Signal (32) beaufschlagt wird,
- **dass** das mit dem Reader Service Signal (32) beaufschlagte RFID Signal (20) in ein HF Band verschoben und als ein Sendesignal drahtlos von den RFID Schreib-/Lesegeräten (10a, 10b) ausgesendet wird,
- wobei zumindest das eine Sendesignal des ersten RFID Schreib-/Lesegeräts (10a) von einer Anzahl elektronischer Etiketten (Tag) (E1, E2) zwecks Kommunikation mit diesem ersten RFID Schreib-/Lesegerät (10a) empfangen wird und
- wobei dieses eine Sendesignal des ersten RFID Schreib-/Lesegeräts (10a) zeitgleich zumindest von dem einen zweiten RFID Schreib-/Lesegerät (10b) zwecks Kommunikation mit diesem ersten RFID Schreib-/Lesegeräts (10a) empfangen wird.

2. Verfahren nach Anspruch 1, **dadurch gekennzeichnet,**
- **dass** das weitere Sendesignal des zweiten RFID Schreib-/Lesegeräts (10b) von einer Anzahl elektronischer Etiketten (E1, E2) zwecks Kommunikation mit diesem zweiten RFID Schreib-/Lesegeräts (10b) empfangen wird und
- **dass** dieses weitere Sendesignal des zweiten RFID Schreib-/Lesegeräts (10b)-zeitgleich zumindest von dem einen ersten RFID Schreib-/Lesegerät (10a) zwecks Kommunikation mit diesem zweiten RFID Schreib-/Lesegerät (10b) empfangen wird.

3. Verfahren nach einem der vorhergehenden Ansprüche 1 oder 2, **dadurch gekennzeichnet, dass** das Reader Service Signal (32) im Spektrum als Seitenbänder einer Amplitudenmodulation oder Einseitenbandmodulation des Trägersignals (31) ausgebildet wird.

4. Verfahren nach Anspruch 3, **dadurch gekennzeichnet, dass** das Reader Service Signal (32) in Form einer Amplitudenmodulation des Trägersignals (31) ausschliesslich AC Anteile im Spektrum enthält

5. Verfahren nach einem der vorhergehenden Ansprüche 3 oder 4, **dadurch gekennzeichnet, dass** das RFID Signal (20) des ersten bzw. des zweiten RFID Schreib-/Lesegeräts (10a, 10b) mit einem kleinem Hub in der Amplitude moduliert oder mit einem Einseitenbandsignal verknüpft wird, so dass im Sendesignal das Reader Service Signal (32) in einem Frequenzabstand fd zu dem Trägersignal (31) entsteht, wobei dieses Sendesignal im zweiten bzw. ersten RFID Schreib-/Lesegerät (10a, 10b) als ein Wechselsignal mit ungefähr der Frequenz fd mit hohem Signal-/Geräuschverhältnis entsteht und wobei dieses Reader Service Signal (32) von den Detektoren der elektronischen Etiketten ignoriert wird.

6. Verfahren nach einem der vorhergehenden Ansprüche 1 bis 5, **dadurch gekennzeichnet, dass** das Reader Service Signal (32) im Basisbandteil (11a, 11b) mit Hilfe digitaler Signalverarbeitung realisiert wird und anschliessend mittels des eine Anzahl lineare Grundblöcke umfassenden Sendeteils (17a, 17b) des HF-Teils (12a, 12b) in den HF-Bereich verschoben wird, sowie im Empfangsfall mittels des eine Anzahl lineare Grundblöcke umfassenden Empfangsteil (16a, 16b) des HF-Teils (12a, 12b) aus dem HF-Bereich verschoben und im Basisbandteil (11a, 11b) mit Hilfe digitaler Signalverarbeitung ausgewertet wird.

7. Verfahren nach einem der vorhergehenden Ansprüche 1 bis 6, **dadurch gekennzeichnet, dass** für RFID Schreib-/Lesegeräte, die nach einem Frequency Hopping Verfahren arbeiten, unter Zuhilfenahme einer Anzahl Zeitmarken Reader Service Signal (32) eine für eine Anzahl RFID Schreib-/Lesegeräte geeignete synchrone Abfolge einer Kanalbenutzung erzielt wird.

8. Verfahren nach einem der vorhergehenden Ansprüche 1 bis 7, **dadurch gekennzeichnet, dass** das Reader Service Signal (32) mit einer Pseudozufalls-Sequenz zusätzlich moduliert ist, so dass sich die Reader Service Signale (32) mehrerer, gleichzeitig sendender RFID Schreib-/Lesegeräte durch eine Korrelation auf Grund spezieller Korrelationseigenschaften einer jeden Sequenz trennen lassen.

9. Verfahren nach Anspruch 8, **dadurch gekennzeichnet, dass** das Reader Service Signal (32) mit der Pseudozufalls-Sequenz des ersten bzw. zweiten RFID Schreib-/Lesegeräts (10a, 10b) für eine elektronische Etikette (E1, E2) als Rauschsignal erscheint und nur für das zweite bzw. erste RFID Schreib-/Lesegerät (10b, 10a), welches die Pseudozufalk-Sequenz kennt, erfassbar ist.

10. Verfahren nach einem der vorhergehenden Ansprüche 1 bis 9, **dadurch gekennzeichnet, dass** das erste RFID Schreib-/Lesegeräts (10a) in einem Netzwerk von RFID Schreib-/Lesegeräten die Funktion eines Masters übernimmt und sich die weiteren in dem Netzwerk befindlichen RFID Schreib-/Lesegeräte nach diesem übergeordneten ersten RFID Schreib-/Lesegeräts (10a) orientieren und/oder dass sich ein Netzwerk, umfassend das erste RFID Schreib-/Lesegerät (10a) und weitere RFID Schreib-/Lesegeräte (10b), selbstständig ausbildet.

11. Verfahren nach Anspruch 10, **dadurch gekennzeichnet, dass** in jedem RFID Schreib-/Lesegerät (10a, 10b) ein Netzwerkplan erzeugt wird, zwecks Kontrollieren benachbarter RFID Schreib-/Lesegeräte (10a, 10b) oder zwecks Bildung von Teilgruppen von RFID Schreib-/Lesegeräten, um das Netzwerk in nicht stationären Umgebungen bei der Abfrage von elektronischen Etiketten (E1, E2) zu optimieren.

12. Verfahren nach einem der Ansprüche 10 oder 11, **dadurch gekennzeichnet, dass** das jeweilige Reader Service Signal (32) folgendes umfasst:
- eine Adresse des ersten bzw. des zweiten RFID Schreib-/Lesegeräts (10a, 10b) und
- mindestens eine Zeitmarke zur Synchronisation einer Anzahl Betriebs-Zeitschlitzen oder einer Anzahl Betriebs-Frequenzkanälen für das jeweilige Sendesignal des ersten bzw. des zweiten RFID Schreib-/Lesegeräts (10a, 10b), zwecks kooperativen Betriebs in einem Netzwerk.

13. Verfahren nach einem der vorhergehenden Ansprüche 1 bis 12, **dadurch gekennzeichnet, dass** das erste und das zweite RFID Schreib-/Lesegerät (10a, 10b) mittels ihrer Basisbandteile (11a, 11b) und einer Empfangsantenne (18a, 18b) und einer Sendeantenne (19a, 19b) eine Anzahl Parameter für die Antennen-Auswahl, Antennen-Konfiguration und Antennen-Strahlsteuerung sowie für die zeitliche Synchronisation der Abläufe mit Hilfe des Reader-Service-Signals (32) übertragen, zwecks einem kooperativen im geometrischen Sinn verstandenen Scan-Vorgangs einer Fläche, einer Oberfläche oder eines Volumens.

## Claims

1. A method for the operation of a first RFID read/write device (10a) and at least one second RFID read/write device (10b), where the first and second RFID read/write devices (10a, 10b) respectively comprise an RF part (12a, 12b) and a baseband part (11a, 11b), based on digital signal processing, with a signal processor (13a, 13b), and where the first and second RFID read/write devices (10a, 10b) are arranged at a usable wireless transmission distance from one another,
**characterized**
- **in that** a Reader Service Signal (32), in its baseband form, is generated in the signal processor (13a, 13b) and is combined with an RFID signal (20) in its baseband form, comprising the carrier signal (31) and optionally the interrogation signal (33), so that the RFID signal (20) has the Reader Service Signal (32) embedded to it in amplitude, frequency or phase,
- **in that** the RFID signal (20) with the added Reader Service Signal (32) is shifted into an RF band and is transmitted as a transmission signal wirelessly by the RFID read/write devices (10a, 10b),
- where at least the one transmission signal from the first RFID read/write device (10a) is received by a number of electronic tags (E1, E2) for the purpose of communicating with this first RFID read/write device (10a), and
- where this one transmission signal from the first RFID read/write device (10a) is simultaneously received at least by the one second RFID read/write device (10b) for the purpose of communicating with this first RFID read/write device (10a) .

2. The method as claimed in claim 1, **characterized**
- **in that** the further transmission signal from the second RFID read/write device (10b) is received by a number of electronic tags (E1, E2) for the purpose of communicating with this second RFID read/write device (10b), and
- **in that** this further transmission signal from the second RFID read/write device (10b) is simultaneously received at least by the one first RFID read/write device (10a) for the purpose of communicating with this second RFID read/write device (10b).

3. The method as claimed in one of the preceding claims 1 and 2, **characterized in that** the Reader Service Signal (32) is arranged in the frequency spectrum as sidebands for amplitude modulation or single sideband modulation of the carrier signal (31).

4. The method as claimed in claim 3, **characterized in that** the Reader Service Signal (32) contains exclusively AC components in the spectrum in the form of amplitude modulation of the carrier signal (31).

5. The method as claimed in either of the preceding claims 3 and 4, **characterized in that** the RFID signal (20) from the first or from the second RFID read/write device (10a, 10b) is amplitude-modulated with a small swing or is combined with a single sideband signal, so that the Reader Service Signal (32) is produced in the transmission signal at a frequency space fd from the carrier signal (31), this transmission signal being resulting in the second and first RFID read/write devices (10a, 10b) as an AC signal at approximately the frequency fd with a high signal-to-noise ratio, and this Reader Service Signal (32) being ignored by the detectors of the electronic tags.

6. The method as claimed in one of the preceding claims 1 to 5, **characterized in that** the Reader Service Signal (32) is produced in the baseband part (11a, 11b) using digital signal processing and is then shifted into the RF range using the transmission part (17a, 17b) of the RF part (12a, 12b), which transmission part comprises a number of linear basic blocks, and also, in the case of reception, is shifted out of the RF range using the reception part (16a, 16b) of the RF part (12a, 12b), which reception part comprises a number of linear basic blocks, and is evaluated in the baseband part (11a, 11b) using digital signal processing.

7. The method as claimed in one of the preceding claims 1 to 6, **characterized in that** for RFID read/write devices operating on the basis of a frequency hopping method a number of Reader Service Signal (32) time markers are used to attain a synchronous channel use sequence which is suitable for a number of RFID read/write devices.

8. The method as claimed in one of the preceding claims 1 to 7, **characterized in that** the Reader Service Signal (32) is additionally modulated with a pseudo-random sequence, so that the Reader Service Signals (32) from a plurality of simultaneously transmitting RFID read/write devices can be separated through correlation on the basis of specific correlation properties of each sequence.

9. The method as claimed in claim 8, **characterized in that** the Reader Service Signal (32) with the pseudo-random sequence from the first and second RFID read/write devices (10a, 10b) for an electronic tag (E1, E2) appears as a noise signal and can be detected only by the second or first RFID read/write device (10b, 10a) which knows the pseudo-random sequence.

10. The method as claimed in one of the preceding claims 1 to 9, **characterized in that** the first RFID read/write device (10a) performs the function of a master in a network of RFID read/write devices, and the other RFID read/write devices in the network orient themselves according to this super ordinate first RFID read/write device (10a), and/or **in that** a network comprising the first RFID read/write device (10a) and further RFID read/write devices (10b) is formed automatically.

11. The method as claimed in claim 10, **characterized in that** each RFID read/write device (10a, 10b) produces a network plan, for the purpose of controlling adjacent RFID read/write devices (10a, 10b) or for the purpose of forming subgroups of RFID read/write devices in order to optimize the network in nonstationary environments when interrogating electronic tags (E1, E2).

12. The method as claimed in either of claims 10 and 11, **characterized in that** the respective Reader Service Signal (32) comprises the following:
- an address for the first or the second RFID read/write device (10a, 10b), and
- at least one time marker for synchronizing a number of operating timeslots or a number of operating frequency channels for the respective transmission signal from the first or the second RFID read/write device (10a, 10b), for the purpose of cooperative operation in a network.

13. The method as claimed in one of the preceding claims 1 to 12, **characterized in that** the first and second RFID read/write devices (10a, 10b) use their baseband parts (11a, 11b) and a reception antenna (18a, 18b) and a transmission antenna (19a, 19b) to transmit a number of parameters for antenna selection, antenna configuration and antenna radiation control and also for time-based synchronization of the procedures using the Reader Service Signal (32), for the purpose of a cooperative scan operation, understood in the geometrical sense, on an area, a surface or a volume.

## Revendications

1. Procédé pour faire fonctionner un premier appareil de lecture/écriture à RFID (10a) et au moins un deuxième appareil de lecture/écriture à RFID (10b), les premier et deuxième appareils de lecture/écriture à RFID (10a, 10b) comprenant chacun une partie HF (12a, 12b) et une partie bande de base basée sur un traitement numérique de signaux (11a, 11b) avec un processeur de signaux (13a, 13b), et les premier et deuxième appareils de lecture/écriture à RFID (10a, 10b) étant disposés l'un par rapport à l'autre à une distance d'émission sans fil,
**caractérisé**
- **en ce qu'**un signal de service du lecteur (32), dans sa formé de bande de base, est généré dans le processeur de signaux (13a, 13b) et combiné à un signal RFID (20) dans sa forme de bande de base, se composant du signal de porteuse (31) et facultativement du signal d'interrogation (33) de sorte que le signal RFID (20) est augmenté ou influencé dans son amplitude, sa fréquence ou sa phase par le signal de service du lecteur (32),
- **en ce que** le signal RFID (20) augmenté ou influencé par le signal de service du lecteur (32) est décalé dans la bande HF et, en tant que signal d'émission, il est émis sans fil par les appareils de lecture/écriture à RFID (10a, 10b),
- moyennant quoi au moins un signal d'émission du premier appareil de lecture/écriture à RFID (10a) est reçu par un certain nombre d'étiquettes électroniques (radio-étiquettes) (E1, E2) à des fins de communication avec ce premier appareil de lecture/écriture à RFID (10a) et
- moyennant quoi ce signal d'émission du premier appareil de lecture/écriture à RFID (10a) est reçu simultanément par au moins le deuxième appareil de lecture/écriture à RFID (10b) à des fins de communication avec ce premier appareil de lecture/écriture à RFID (10a).

2. Procédé selon la revendication 1, **caractérisé**
- **en ce que** l'autre signal d'émission du deuxième appareil de lecture/écriture à RFFD (10b) est reçu par un certain nombre d'étiquettes électroniques (E1, E2) à des fins de communication avec ce deuxième appareil de lecture/écriture à RFID (10b) et
- **en ce que** cet autre signal d'émission du deuxième appareil de lecture/écriture à RFID (10b) est reçu simultanément par au moins le premier appareil de lecture/écriture à RFID (10a) à des fins de communication avec ce deuxième appareil de lecture/écriture à RFID (10b).

3. Procédé selon l'une quelconque des revendications précédentes 1 ou 2, **caractérisé en ce que** le signal de service du lecteur (32) est formé dans le spectre en tant que bandes latérales d'une modulation d'amplitude ou d'une modulation à bande latérale unique du signal de porteuse (31).

4. Procédé selon la revendication 3, **caractérisé en ce que** le signal de service du lecteur (32) sous la forme d'une modulation d'amplitude du signal de porteuse (31) contient exclusivement des parties alternatives dans le spectre.

5. Procédé selon l'une quelconque des revendications précédentes 3 ou 4, **caractérisé en ce que** le signal RFID (20) du premier, respectivement du deuxième appareil de lecture/écriture à RFID (10a, 10b) est modulé avec une petite excursion dans l'amplitude ou est combiné avec un signal de bande latérale unique de sorte que, dans le signal d'émission, le signal de service du lecteur (32) soit généré avec un écart de fréquence fd par rapport au signal de porteuse (31), moyennant quoi ce signal d'émission dans le deuxième respectivement le premier appareil de lecture/écriture à RFID (10a, 10b) est généré en tant que signal alternatif ayant à peu près la fréquence fd avec un rapport signal sur bruit plus élevé et moyennant quoi ce signal de service du lecteur (32) est ignoré par les détecteurs des étiquettes électroniques.

6. Procédé selon l'une quelconque des revendications précédentes 1 à 5, **caractérisé en ce que** le signal de service du lecteur (32) dans la partie bande de base (11a, 11b) est réalisé à l'aide d'un traitement numérique de signaux et qu'il est décalé ensuite dans le domaine HF à l'aide de la partie émettrice (17a, 17b), comprenant un certain nombre de blocs de base linéaires, de la partie HF (12a, 12b), et qu'il est aussi décalé en dehors du domaine HF, dans le cas de la réception, au moyen de la partie réceptrice (16a, 16b), comprenant un certain nombre de blocs de base linéaires, de la partie HF (12a, 12b) et qu'il est évalué dans la partie bande de base (11a, 11b) à l'aide d'un traitement numérique de signaux.

7. Procédé selon l'une quelconque des revendications précédentes 1 à 6, **caractérisé en ce que**, pour des appareils de lecture/écriture à RFID, qui travaillent selon un procédé à saut de fréquence, une suite synchrone, appropriée pour un certain nombre d'appareils de lecture/écriture à RFID, d'une utilisation des canaux, est obtenue à l'aide d'un certain nombre de repères temporels en tant que signal de service du lecteur (32).

8. Procédé selon l'une quelconque des revendications précédentes 1 à 7, **caractérisé en ce que** le signal de service du lecteur (32) est modulé en plus avec une séquence pseudo-aléatoire de sorte que les signaux de service de lecteur (32) de plusieurs appareils de lecture/écriture à RFID émettant simultanément puissent être séparés par une corrélation en raison de propriétés de corrélation spéciales de chaque séquence.

9. Procédé selon la revendication 8, **caractérisé en ce que** le signal de service du lecteur (32) avec la séquence pseudo-aléatoire du premier respectivement du deuxième appareil de lecture/écriture à RFID (10a, 10b) apparaît pour une étiquette électronique (E1, E2) en tant que signal de bruit et n'est détectable que pour le deuxième respectivement le premier appareil de lecture/écriture à RFID (10b, 10a) qui connaît la séquence pseudo-aléatoire.

10. Procédé selon l'une quelconque des revendications précédentes 1 à 9, **caractérisé en ce que** le premier appareil de lecture/écriture à RFID (10a) dans un réseau d'appareils de lecture/écriture à RFID prend la fonction d'un maître et que les autres appareils de lecture/écriture à RFID se trouvant dans le réseau s'orientent selon ce premier appareil de lecture/écriture à RFID principal (10a) et/ou **en ce qu'**il se forme automatiquement un réseau comprenant le premier appareil de lecture/écriture à RFID (10a) et d'autres appareils de lecture/écriture à RFID (10b),

11. Procédé selon la revendication 10, **caractérisé en ce que** dans chaque appareil de lecture/écriture à RFID (10a, 10b) est généré un plan de réseau, à des fins de contrôle des appareils de lecture/écriture à RFID voisins (10a, 10b) ou à des fins de formation de groupes partiels d'appareils de lecture/écriture à RFID, afin d'optimiser le réseau dans des environnements non stationnaires lors de l'interrogation des étiquettes électroniques (E1, E2).

12. Procédé selon l'une quelconque des revendications 10 ou 11, **caractérisé en ce que** ledit signal de service du lecteur (32) comprend les éléments suivants :
- une adresse du premier respectivement du deuxième appareil de lecture/écriture à RFID (10a, 10b) et
- au moins un repère temporel destiné à la synchronisation d'un certain nombre d'intervalles de temps de service ou d'un certain nombre de canaux de fréquence de service pour ledit signal d'émission du premier respectivement du deuxième appareil de lecture/écriture à RFID (10a, 10b), à des fins de fonctionnement coopératif dans un réseau.

13. Procédé selon l'une quelconque des revendications précédentes 1 à 12, **caractérisé en ce que** les premier et deuxième appareils de lecture/écriture à RFID (10a, 10b) transmettent au moyen de leurs parties bande de base (11a, 11b) ainsi que d'une antenne de réception (18a; 18b) et d'une antenne d'émission (19a, 19b) un certain nombre de paramètres pour la sélection des antennes, la configuration des antennes et la commande de rayonnement des antennes ainsi que pour la synchronisation temporelle des opérations à l'aide du signal de service du lecteur (32), dans le but d'une procédure de balayage, coopérative comprise dans le sens géométrique, d'une superficie, d'une surface ou d'un volume.
